Europäisches Patentamt

European Patent Office

Office européen des brevets

(11) Publication number: **0 448 153 A1**

# EUROPEAN PATENT APPLICATION

(21) Application number: **91200527.9**

(22) Date of filing: **11.03.91**

(51) Int. Cl.⁵: **A01G 9/02**, A01G 9/10, A01G 31/00

(30) Priority: **12.03.90 NL 9000559**

(43) Date of publication of application:
**25.09.91 Bulletin 91/39**

(84) Designated Contracting States:
**AT BE CH DE FR GB IT LI NL**

(71) Applicant: **Rockwool/ Grodan B.V.**
**Industrieweg 15**
**NL-6074 NH Melick-Herkenbosch(NL)**

(72) Inventor: **Okhuisen, Gertus Jan**
**Richterdael 31**
**NL-6045 DJ Roermond(NL)**

(74) Representative: **Prins, Hendrik Willem et al**
**Octrooibureau Arnold & Siedsma**
**Sweelinckplein, 1**
**NL-2517 GK The Hague(NL)**

(54) **Culture system and culture element therefor.**

(57) The invention relates to a culture element (1), comprising a sheet (2) and at least two grow-mats (3,4) fixed to the sheet with fixing means (7) at a mutual distance and without capillary contact. Preferably, at least one row of elongate grow-mats is fixed to the sheet, and the grow-mats are located at a regular mutual distance. The invention relates further to a culture system wherein two culture elements are mutually connected via at least one sheet strip.

FIG.2

EP 0 448 153 A1

The present invention relates to a culture system and a culture element therefor. This culture system is generally intended for arrangement on or above a ground, such as an object to be camouflaged, a roof, an outer wall, an incline and the like. The culture system is then intended for cover, embellishment, closing, cooling, insulation and/or elimination of direct inward light radiation, while also providing a uniform vegetation. The culture system is further suitable for the laying out, for instance in a greenhouse, of large numbers of grow-mats according to a specific pattern.

This aim is accordingly achieved with a culture system according to the invention which comprises at least one culture element, comprising a sheet with at least two grow-mats situated at a mutual distance and fixed to the sheet with fixing means, wherein the culture element is arranged over the ground.

Such a culture system according to the invention can easily be arranged on or over a ground, while the mutually separated grow-mats do not influence each other's water management, or hardly so. Withering due to capillary suction by lower lying mats or by less moist mats is thus avoided. The culture elements can moreover be provided with a pre-cultured vegetation, whereby vegetation is provided immediately on disposition.

The grow-mats are preferably fixed to the sheet in rows of mutually separated grow-mats. In these rows the grow-mats can adjoin each other on their short and/or long sides, this depending on the pattern to be laid. The grow-mats are preferably located at a regular mutual distance. This distance can vary in practice between 0.5 and for instance 10 cm, although all that is essential is that there is no capillary contact between the separate grow-mats.

If the ground has capillary action, or a seepage of water is not permissible, it is recommended that the sheet is water impermeable. In other cases the sheet can be water permeable.

The fixing means with which the grow-mats are fixed to the sheet can be any type of usual fixing means. For example, the grow-mats can be fixed by means of stitching, glueing, adhesive, or by arranging a perforated sheet through which vegetation can develop. According to an advantageous embodiment the fixing means consist of straps which are arranged over the grow-mats and fixed to the sheet between or under the grow-mats. According to a preferred embodiment the fixing means are made of very similar, or even the same material from which the sheet is manufactured.

Depending on the form of application, the culture system or the culture slab can be provided with means for supplying a growth liquid, water optionally provided with nutrients, to the grow-mats.

In the case of a sheet disposed slopingly it can for instance be sufficient to only supply growth liquid to the highest situated grow-mat, from where water can flow away to lower lying grow-mats. It is further possible to supply water via a sprinkler, or via known drip units.

If in preference the culture system is provided with a sheet strip extending laterally adjacent to the grow-mats on at least one side of the sheet, a number of culture elements can be arranged with overlapping sheets, whereby a closed, very large, sheet surface is created.

Mentioned and other features will be elucidated hereinafter with reference to a number of non-limiting embodiments of the culture system with culture elements according to the invention.

Figure 1 shows a perspective view of a culture element according to the invention;

figure 2 is a top view of a culture system assembled from culture elements from figure 1;

figure 3 shows a section through a sloping ground over which culture elements from figure 1 are arranged;

figure 4 shows a section of a culture system with other culture elements wherewith an object is camouflaged; and

figure 5 is a perspective view of a culture system according to the invention laid out in a greenhouse and intended for substrate culture of plants.

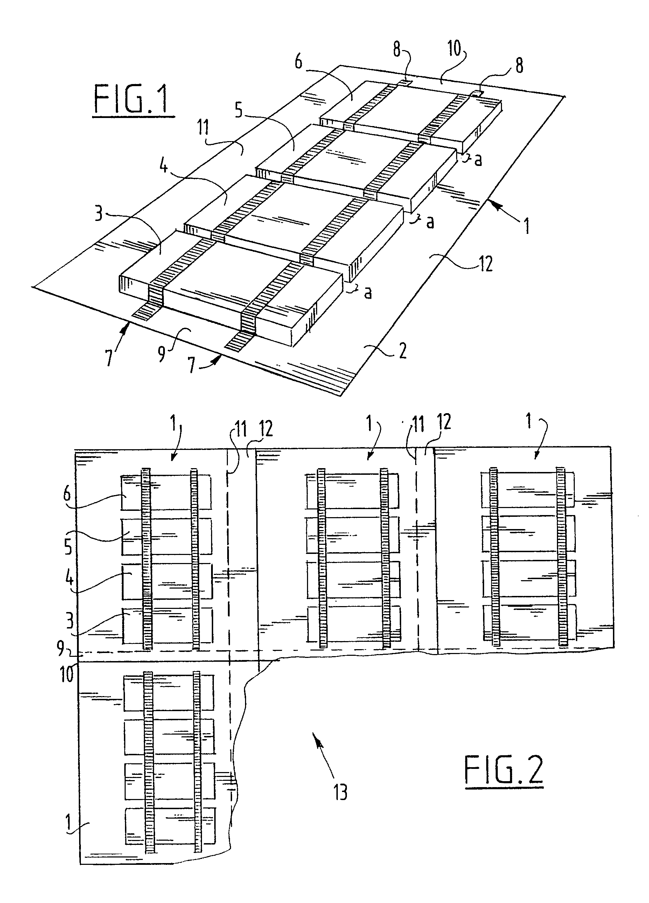

Figure 1 shows a culture element 1 according to the invention. The culture element 1 comprises a water permeable sheet 2 whereon a number of grow-mats are fixed with fixing means 7, which in this case consist of two mutually parallel straps, which are stitched to the water permeable sheet enclosing the grow-mats 3-6.

A fabric is typically used as water permeable sheet. This fabric can consist of a plastic, such as polythene, polyethene terephthalate, polyvinyl chloride, a natural product, such as coir or jute. In the case of a water-repellant sheet these fabrics can be provided with a water-repellant plastic layer. The thickness of the sheet is determined by its application and varies in practice between roughly 0.05 and 20 mm. The straps 8 preferably consist of the same material as the water permeable sheet.

The grow-mats 3-6 consist in this case of coherent blocks of growth substrate. This growth substrate can consist of organic, synthetic and/or inorganic material. Conceivable here is mineral wool, such as rockwool and glass wool, foamed plastics, types of soil and humus material and any practical mixtures thereof. A non-coherent mass of growth substrate of the same materials can also be used.

In the case of the grow-mats 3-6, their mutual distance is a, for example 2 cm.

The sheet 2 is provided with two short lengthwise strips 9 and 10 and with two long lengthwise strips 11 and 12.

As shown in figure 1 the culture system 13 according to the invention comprises a number of culture elements 1 from figure 1, wherein the lengthwise strips 9 and 10; 11 and 12 are arranged mutually overlapping and optionally mutually connected, thereby resulting in a large, closed undersheet on which the grow-mats are fixed.

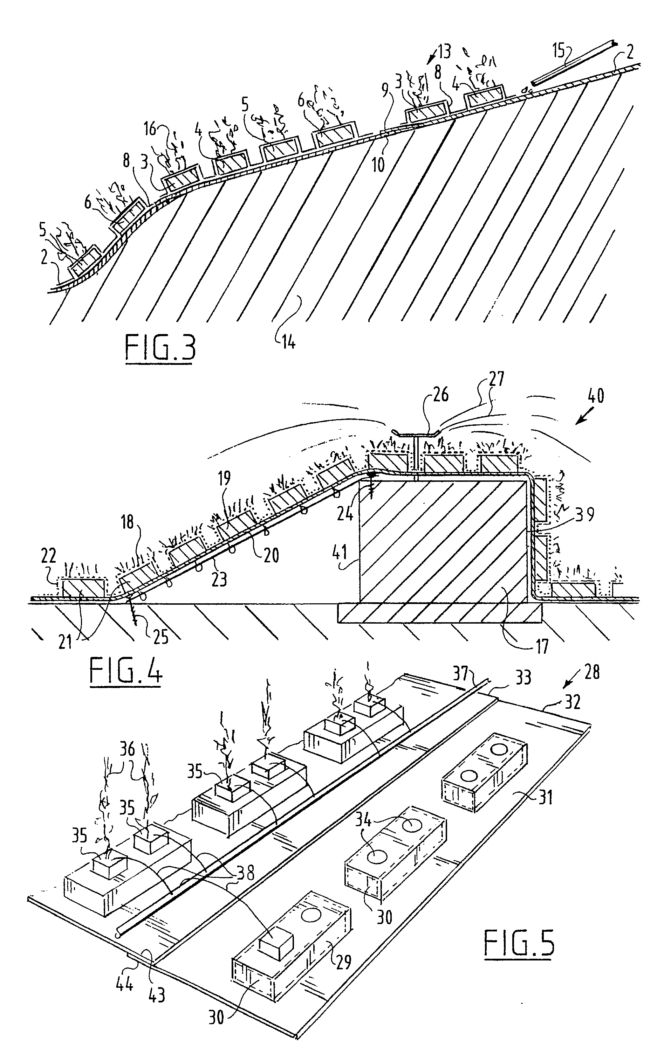

An application of the culture system according to figure 2 is shown in figure 3. The culture system 13 is arranged on an inclining ground 14 which displays no capillary behaviour, and therefore the sheet 2 can consist of a water permeable sheet. The sheet 2 is arranged on the ground 14 following its profile, while the short lengthwise strips 9 and 10 overlap. By means of a feed line 15 water is supplied to the highest lying grow-mat, and under the influence of gravity the water flows down over the sloping sheets 2 to the lower lying grow-mats. Thus provided is a culture system with a flourishing vegetation 16 thereon. This vegetation 16 can consist of all kinds of herbaceous plants, weeds, grasses, which can be cultivated and/or sown in the grow-mats in advance.

Figure 4 shows another culture system 40 according to the invention for camouflaging an object 17 with a vegetation 18. The object 17 built into the ground 42 is covered with a culture element 19 according to the invention. The culture element 19 consists of a water impermeable sheet 20, onto which ridges 21 of growth medium, in this case a mineral wool granulate, are fixed with a perforated sheet 22 that is welded fixedly to the water impermeable sheet between the ridges 21. The vegetation 18 grows through the perforated sheet 22.

From the side 41 of the object the sheet 20 rests on a grid of wires 23 which are stretched between a pin 24 fixed on the object 17 and a pin 25 fixed in the ground 42.

On the other side 24 of the object 17 the sheet 20 hangs freely and again follows the profile of the ground 42.

Using a sprinkler 26 arranged on the object, water jets 27 regularly provide the vegetation 18 with water.

Finally, figure 5 shows a culture system 28 according to the invention, wherein growth culture elements 32 and 33 of this culture system 28 enveloped in plastic bags 29 overlap each other with the lengthwise strips 43 and 44 which, if desired, can be fixedly joined to each other. Thus created is a culture system 28 with rows of grow-mats 30 having for example two bag openings 34. Placed on these bag openings are grow-blocks 35, via which plants 36 grow out into the grow-mats. By means of a feed line 37 and drippers 38 nutrient liquid, water with nutrients, is supplied to the grow-blocks 35. A culture system 28 is thus provided which can be laid out quickly in a desired pattern on a large surface in a greenhouse.

## Claims

1. Culture element, comprising a sheet and at least two grow-mats fixed to the sheet with fixing means at a mutual distance and without capillary contact.

2. Culture element as claimed in claim 1, wherein at least one row of elongate grow-mats is fixed to the sheet.

3. Culture element as claimed in claim 2, wherein the grow-mats are located at a regular mutual distance.

4. Culture element as claimed in claims 1-3, wherein a sheet strip of the sheet extends at the sides adjacent to the grow-mats.

5. Culture element as claimed in claims 1-4, wherein the sheet is water impermeable.

6. Culture element as claimed in claims 1-4, wherein the sheet is water permeable.

7. Culture element as claimed in claims 1-6, wherein the fixing means comprise straps.

8. Culture element as claimed in claim 7, wherein the fixing means are made of sheet material.

9. Culture element as claimed in claims 1-8, comprising means for supplying growth liquid to the grow-mats.

10. Culture system comprising at least one culture element as claimed in claims 1-9 which is arranged over a ground.

11. Culture system as claimed in claim 10, wherein two culture elements are mutually connected via at least one sheet strip.

FIG.1

FIG.2

FIG.3

FIG.4

FIG.5

# EUROPEAN SEARCH REPORT

EP 91 20 0527

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 634 971 (BLANC)<br>* page 1, line 30 - page 2, line 12 * * page 3, line 35 - page 4, line 9; figures 3,4 *<br>— — — | 1-11 | A 01 G 9/02<br>A 01 G 9/10<br>A 01 G 31/00 |
| Y | FR-A-2 115 783 (E.A.H.NAUE KG)<br>* page 2, line 30 - page 3, line 17 * * page 19, line 1 - line 9; figures 36-37,38B *<br>— — — | 1-9 | |
| Y | US-A-3 160 986 (WATSON ET AL.)<br>* column 2, line 17 - line 38; figure 1 *<br>— — — | 10,11 | |
| A | EP-A-0 182 263 (BENTLE PRODUCTS AG)<br>* abstract; figures 1,3,5 *<br>— — — | 1-5,7,8 | |
| A | FR-A-2 350 778 (ROCKWOOL INTERNATIONAL)<br>* page 1, line 5 - line 39 *<br>— — — | 1-3,5 | |
| A | EP-A-0 201 426 (ISOVER SAINT-GOBAIN)<br>* column 11, line 5 - line 26; figure 1 *<br>— — — | 1-3,6 | |
| A | FR-A-2 172 040 (SQUECCO)<br>* page 2, line 33 - page 3, line 9; figures 1,2 *<br>— — — — — | 1,10,11 | TECHNICAL FIELDS SEARCHED (Int. Cl.5)<br><br>A 01 G |

The present search report has been drawn up for all claims

| Place of search | Date of completion of search | Examiner |
|---|---|---|
| The Hague | 20 June 91 | PERNEY Y.J. |